# EUROPEAN PATENT APPLICATION

(11) **EP 0 907 141 A1**
(43) Date of publication of application: **07.04.1999**
(21) Application number: 98307458.4
(22) Date of filing: 15.09.1998
(51) Int. Cl.: G06K 11/18, G06F 3/033

(54) **Wireless mouse apparatus**

(30) Priority: 16.09.1997 JP 250383/97
(71) Applicant: Hudson Soft Co., Ltd., Sapporo-shi, Hokkaido (JP)
(72) Inventor: Togashi, Shoichi, c/o Hudson Soft Co., Ltd., Sapporo-shi, Hokkaido (JP)
(74) Representative: Haley, Stephen

(57) **Abstract**

A wireless mouse apparatus comprises a wireless mouse, a transmitter and a receiver. Signals in response to the operation of ball and button of the wireless mouse are transmitted from the transmitter in the form of optical signal such as infrared ray. The signal transmitted from the transmitter is received by one of the wireless signal receiving units of the receiver that is protruded. The received signal is transferred to a personal computer which is connected with the wireless signal receiving unit through a signal cable. Thereby a wireless mouse apparatus which can be shared by a plurality of personal computers, thus with less burden of cost, is provided.

## Description

This invention relates to a wireless mouse apparatus used for a personal computer (PC), particularly to a wireless mouse apparatus consisting of a wireless mouse and a receiver for receiving signals from the wireless mouse.

The applicant proposed in the Japanese Patent Application No.9-066966 a wireless mouse apparatus consisting of a receiving unit connected with a personal computer (PC, hereinafter) and located on a mouse pad, and a wireless mouse which transmits the amount of movement of itself to the receiving unit by radio signals.

This wireless mouse apparatus is provided with a mouse button, a ball to roll on a mouse pad, X encoder and Y encoder which output as data signals the amounts of movement of the ball decomposed to those in the directions of X-axis and Y-axis, respectively, a transmitting unit which outputs as a transmission signal an "on" signal of the mouse button or output data signals from the X-encoder and the Y-encoder, a transmission antenna for transmitting the transmission signal outputted from the transmitting unit, and a battery, such as a dry battery, for supplying electric powers required for respective units.

The receiver placed on the mouse pad is provided with a receiving antenna for receiving transmission signals from the transmission antenna of the wireless mouse, a receiving unit for detecting an "on" signal of the mouse button or the data signals indicating the amounts of movement of the ball in the mouse body in the directions of X-axis and Y-axis, and a signal cable connected to a PC, whereby the "on" signal from the mouse button or the data signal indicating the amount of movement is transmitted through the signal cable to the PC.

A PC can be operated by such a wireless mouse apparatus. For example, as the wireless mouse is moved on the mouse pad, a pointer moves on the display of PC in accordance with the amount of movement of the mouse. A desired icon can be selected by operating the wireless mouse so as to bring the pointer on the display of PC to a desired icon and clicking the mouse button when the pointer reaches the icon on the display.

As the wireless mouse apparatus referred to above is furnished with a single receiving unit, a plurality of the wireless mouse apparatuses are required in some cases where a plurality of PCs concern, thus the costs for mouse being increased. For example, in a series of PCs connected in a LAN (Local Area Network), documents are produced by a PC, images such as drawings are produced by another PC, these data are transferred to a PC for server to be combined as transmission data and transmitted through a MODEM or else to an external network (outside the LAN) or else. In such a case, a plurality of wireless mouse apparatuses connected respectively to each of PCs are required if they have a single receiver.

Accordingly, it is an object of the invention to provide a wireless mouse apparatus which is shared by a plurality of personal computers.

It is another object of the invention to provide a wireless mouse apparatus which simplifies an input tool for a plurality of personal computers.

According to the invention, a wireless mouse apparatus comprises:
a wireless mouse moving on a predetermined plane, said wireless mouse having a transmitter for transmitting a signal;
means for receiving said signal transmitted from said transmitter of said wireless mouse, said signal receiving means being connected to a plurality of personal computers; and
means for selecting a personal computer from said plurality of personal computers, said personal computer selected by said personal computer selecting means being supplied with said signal which is received by said signal receiving means.

### In the accompanying drawings:-

The invention will be explained in more detail in conjunction with appended drawings, wherein:
Figs.1A to 1C show a preferred embodiment of wireless mouse apparatus according to the present invention;
Figs.2 is an explanatory diagram showing the wireless mouse apparatus shown in Figs.1A to 1C;
Fig.3 shows briefly the second embodiment of receiving unit in a wireless mouse apparatus according to the invention.
Fig.4 shows briefly the third embodiment of receiving unit in a wireless mouse apparatus according to the invention.

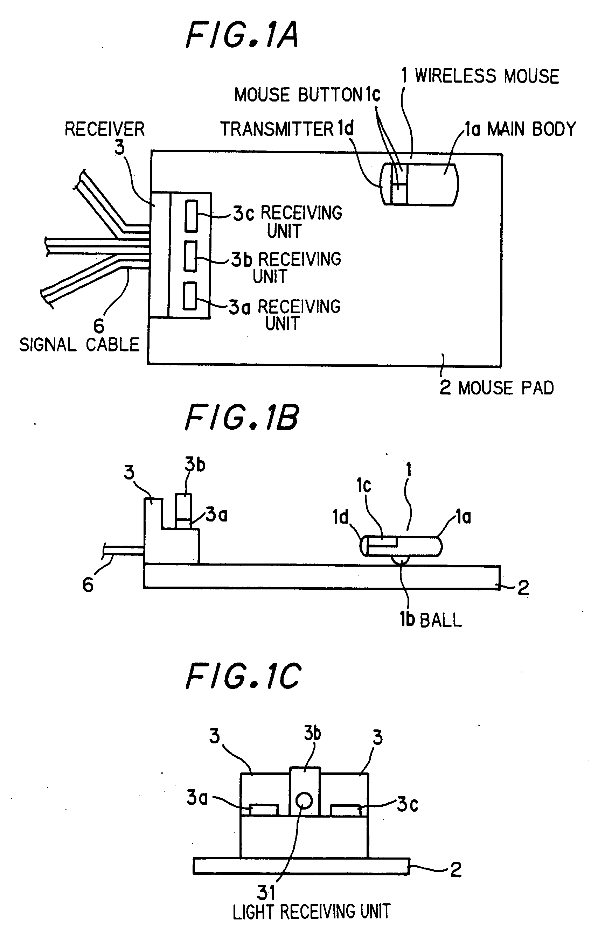

Figs.1A to 1C show a preferred embodiment of wireless mouse apparatus according to the invention. This wireless mouse apparatus has wireless mouse 1 and receiver 3 which is placed on mouse pad 2.

Wireless mouse 1 consists of ball 1b capable of rolling on mouse pad 2, mouse button 1c for generating control signals for the personal computer (PC), transmitter 1d for transmitting signals, and main body la of wireless mouse for containing mouse button 1c and transmitter 1d.

Receiver 3 on mouse pad 2 includes three wireless signal receiving units 3a to 3c. Each of these wireless signal receiving units 3a to 3c is provided with light receiving unit 31 for receiving signals from wireless mouse 1 and can take a protruded position for light receiving so that a selected light receiving unit is permitted to receive light. Receiver 3 is provided with three signal cables 6 connected with wireless signal receiving units 3a to 3c, respectively, so as to be connected to three PCs (not shown) respectively through these cables.

In the wireless mouse apparatus shown in Figs. 1A to 1C according to the invention, signals in accordance with the operation of ball 1b and mouse button 1c of wireless mouse 1 are transmitted from transmitter 1d in the form of optical signal such as infrared ray. The signal is received by light receiving unit 31 of wireless signal receiving unit 3b selected from wireless signal receiving units 3a to 3c, which unit is protruded. The received signal is transferred to a PC (not shown) connected to wireless signal receiving unit 3b through signal cable 6.

Fig .2 shows wireless mouse 1 and receiver 3 explained above with reference to Figs.1A to 1C. Wireless mouse 1 is provided with mouse button 1c, X encoder 11, Y encoder 12, transmitting circuit 13, transmitting unit 14 and battery 15. Mouse button lc generates control signals to PCs 8a to 8c when it is clicked after an icon is selected on the display of PCs 8a to 8c. X encoder 11 and Y encoder 12 output signals in frequencies (numbers of pulses for unit time) in accordance with the amounts of movement in the directions of X axis and Y axis, respectively, derived from the amount of movement of ball 1b (Fig. 1B). Transmitting circuit 13 generates transmission signals in accordance with signals from mouse button 1c or from X encoder 11 and Y encoder 12. Transmitting unit 14 transmits the transmission signals outputted from transmitting circuit 13. Battery 15 supplies electric power to every portion.

Receiver 3 includes three wireless signal receiving units 3a to 3c connected to PCs 8a to 8c, respectively, through cables 6. Each of wireless signal receiving units 3a to 3c is provided with light receiving unit 31 for receiving transmission signals from transmitting unit 14 of wireless mouse 1 and with demodulating circuit 32 for demodulating signals received at light receiving unit 31 to generate the control signals from mouse button 1c in wireless mouse 1 or the pulse signals which indicate the amount of movement of ball 1b (Fig.1B) in the directions of X axis and Y axis. Demodulating circuits 32 are connected respectively to PCs 8a to 8c through signal cables 6.

In the arrangement above, a required image is made on display by operating all or one of PCs 8a to 8c (for example, PC 8b). A user, then, chooses a PC to be used from PCs 8a to 8c. When the user chooses, for example, PC 8b, wireless signal receiving unit 3b connected to PC 8b through signal cable 6 is protruded so as to expose receiving unit 31 of wireless signal receiving unit 3b above mouse pad 2.

The user, then, moves wireless mouse 1 on mouse pad 2 in the predetermined direction in the predetermined distance. Thereby, ball 1b (see Fig.1B) is caused to roll so as to output pulse signals in frequencies which vary in accordance with the amount of movement of ball 1b in the directions of X axis and Y axis, respectively, the pulse signals being supplied to transmitting circuit 13. Transmission signals based on the pulse signals mentioned above are generated by transmitting circuit 13 and transmitted from transmitting unit 14.

The transmission signals transmitted from transmitting unit 14 of wireless mouse 1 are received by light receiving unit 31 of wireless signal receiving unit 3b protruded from receiver 3. The signals received by light receiving unit 31 are transmitted to demodulating circuit 32 by which the signals are demodulated to pulse signals indicating the amount of movement of ball 1b of wireless mouse 1 in the directions of X axis and Y axis. The demodulated signals are transmitted to PC 8b through cable 6 connecting PC 8b with demodulating circuit 32. According to this signal, the pointer on display of PC 8b is moved in the predetermined distance in the predetermined direction. This movement allows the pointer to travel to a predetermined icon on the display of PC 8b.

By pressing (clicking) button lc on wireless mouse 1 in this status with the pointer on the predetermined icon, the control signal is supplied to PC 8b through transmitting circuit 13 and transmitting unit 14 of transmitter 1d, light receiving unit 31 and demodulating circuit 32 of wireless signal receiving unit 3b of receiver 3 and signal cable 6, so that selection of the icon by means of the pointer on the display of PC 8b is executed. The application designated by this icon is executed so that the predetermined process is performed in PC 8b. Subsequently, wireless signal receiving unit 3a or 3c is protruded in place of unit 3b which is descended now, thereby PC 8a or 8c connected through signal wire 6 respectively with the wireless signal receiving unit 3a or 3c, which is protruded, can be operated by wireless mouse 1. Wireless signal receiving units 3a, 3b and 3c are so constructed that only one of them is protruded.

While a preferred embodiment of wireless mouse apparatus according to the invention is shown above, there is another embodiment in which receiver 3 is provided with a single demodulation circuit 32 to be used in common for wireless signal receiving units 3a to 3c, where a switch is operated according to protrusion of wireless signal receiving units 3a to 3c in order to select one of signal cables 6 to be connected with demodulation circuit 32.

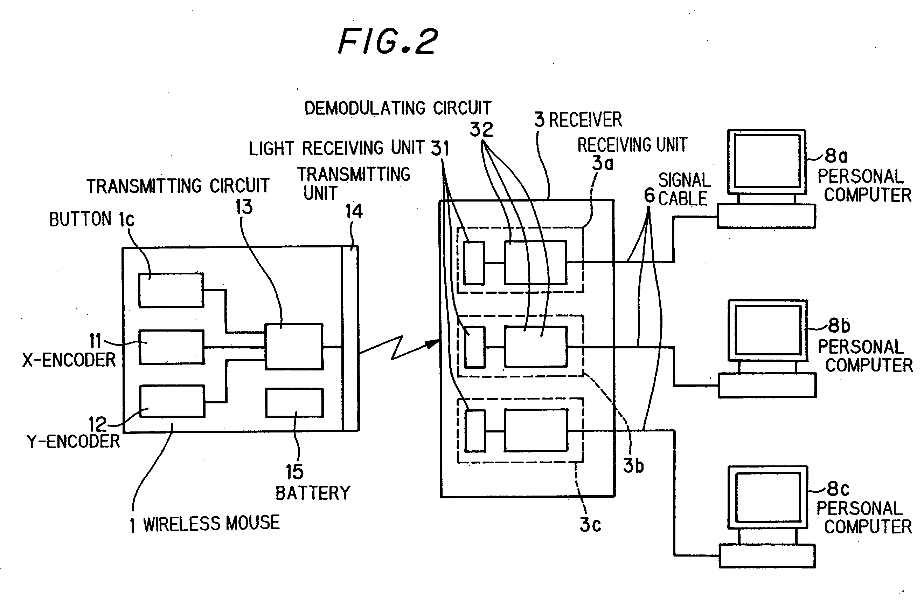

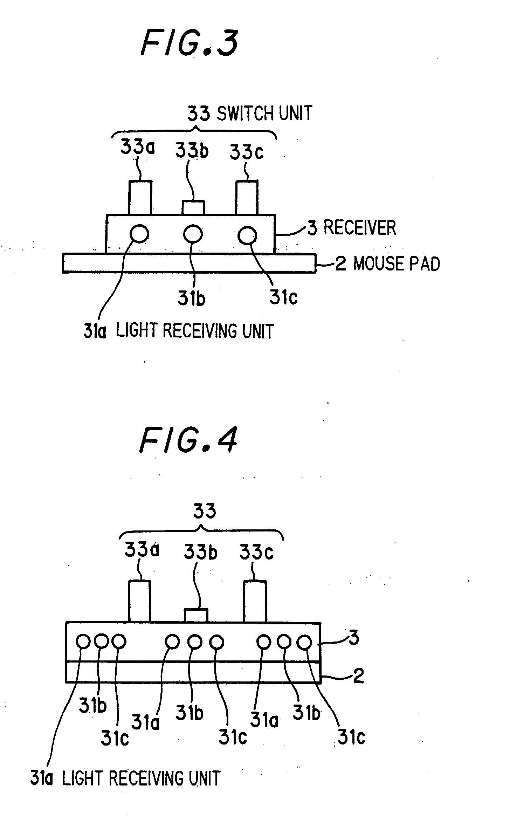

Fig.3 shows another preferred embodiment of receiver 3 shown in Figs.1a to 1c. In this embodiment, receiver 3 is provided with three light receiving units 31a to 31c exposed always on mouse pad 2 and switches 33a to 33c in switch unit 33 for selecting one of light receiving units 31a to 31c. One of the three light receiving units 31a to 31c can be selected by pressing one of switches 33a to 33c in switch unit 33. For example, when switch 33b in switch unit 33 is pressed, light receiving unit 31b is selected to be ready for operation (the other two are not in operation) so that it is connected with PC 8b through signal cable 6 by the arrangement similar to wireless signal receiving unit 3b in Fig.2.

Fig.4 shows another preferred embodiment of receiver 3 having light receiving units 31a to 31c respectively in plurality. Receiver 3 shown in Fig.4 is provided with light receiving units 31a to 31c as shown in Fig.3 respectively in multitude arranged in parallel. Thus, wireless mouse 1 can be operated surely in area all over mouse pad 2.

Press-down switches 33a to 33c for switch unit 33 shown in Fig.3 and Fig.4 may be replaced by slide switches. Further, a set of light receiving units 31a to 31c may be one light receiving unit 31 and one of signal cables 6 connected with receiver 3 may be selected to be connected to a corresponding PC by switch unit 33.

In the preferred embodiments of wireless mouse apparatus according to the invention shown above, battery 15 of wireless mouse 1 may be rechargeable. A cover made of a material with increased resistance against rolling may be provided on mouse pad 2 in order to prevent it from dirt or damage.

Receiver 3 may have a single signal receiving unit which is connected with a plurality of PCs 8a, 8b and 8c through separate buses or cables to form multiple transmission routes, one of which is selected by means of, for example, a switch provided on receiver 3 or main body la of the wireless mouse. Though receiver 3 is placed on mouse pad in the preferred embodiments above, receiver 3 may be placed elsewhere.

As a wireless mouse apparatus according to the invention is capable of transmitting transmission signals from a wireless mouse selectively to a plurality of PCs, as mentioned above, a single wireless mouse can be shared by a plurality of PCs, whereby a wireless mouse apparatus with decreased costs can be provided.

As this invention may be embodied in several forms without departing from the spirit of essential characteristics thereof, the present embodiment is therefore illustrative and not restrictive, since the scope of the invention is defined by the appended claims rather than by the description proceeding them, and all changes that fall within meets and bounds of the claims, or equivalence of such meets and bounds are therefore intended to be embraced by the claims.

## Claims

1. A wireless mouse apparatus, comprising:
a wireless mouse moving on a predetermined plane, said wireless mouse having a transmitter for transmitting a signal;
means for receiving said signal transmitted from said transmitter of said wireless mouse, said signal receiving means being connected to a plurality of personal computers;and
means for selecting a personal computer from said plurality of personal computers, said personal computer selected by said personal computer selecting means being supplied with said signal which is received by said signal receiving means.

2. A wireless mouse apparatus as defined in claim 1, wherein: said signal receiving means includes a plurality of signal receiving units connected separately to said plurality of personal computers; and
said personal computer selecting means exposes one of said plurality of signal receiving units to said signal and hides rest of said plurality of signal receiving units from said signal.

3. A wireless mouse apparatus as defined in claim 2, wherein: said one of said plurality of signal receiving units protrudes or slides to be exposed to said signal.

4. A wireless mouse apparatus as defined in claim 2, wherein: each of said plurality of signal receiving units comprises a light receiving unit for receiving said signal which is a light signal.

5. A wireless mouse apparatus as defined in claim 2, wherein: each of said plurality of signal receiving units comprises a plurality of light receiving units for receiving said signal which is a light signal.

6. A wireless mouse apparatus as defined in claim 1, wherein:
said plurality of signal receiving units and said personal computer selecting means are placed on a mouse pad.

7. A wireless mouse apparatus as defined in claim 1, wherein:
said signal receiving means comprises switch-over buses for transmitting said signal received from said wireless mouse to said plurality of personal computers, and
said personal computer selecting means comprises means for switching over said switchover buses.

8. A wireless mouse apparatus as defined in claim 7, wherein:
said switching over means is placed on said wireless mouse and
said switch-over buses are switched over in response to a signal which said signal receiving means receives from said wireless mouse.
